# EUROPÄISCHE PATENTANMELDUNG

(11) **EP 4 497 937 A1**
(43) Veröffentlichungstag der Anmeldung: **29.01.2025**
(21) Anmeldenummer: 24180065.5
(22) Anmeldetag: 04.06.2024
(51) Int. Cl.: F02K 5/00, F02K 7/08

(54) **TURBINENLOSES STRAHLTRIEBWERK**

(30) Priorität: 28.07.2023 DE 102023003108
(71) Anmelder: MBDA Deutschland GmbH, 86529 Schrobenhausen (DE); Bayern-Chemie Gesellschaft für flugchemische Antriebe mbH, 84544 Aschau am Inn (DE)
(72) Erfinder: KRENIK, Alexander, 86633 Neuburg a.d. Donau (DE); BAUER, Christoph, 84544 Aschau am Inn (DE)
(74) Vertreter: Isarpatent

(57) **Zusammenfassung**

Antriebsmodul mit einem Strahltriebwerk, wobei das Antriebsmodul umfasst: einen Verdichter zum Verdichten eines Einlassgases vor dessen Eintritt in zumindest eine Brennkammer des Strahltriebwerks und einen elektrischen Antrieb zum Antreiben des Verdichters, wobei der elektrische Antrieb außerhalb eines Strahls des Strahltriebwerks angeordnet ist.

## Beschreibung

### TECHNISCHES GEBIET DER ERFINDUNG

Die Erfindung betrifft Strahltriebwerke, Strahltriebwerke, die keine interne Turbine im Strahl zum Betreiben eines Verdichters im Strahltriebwerk aufweisen, insbesondere Strahltriebwerke mit einem extern angetriebenen Verdichter, sowie Verfahren zum Betreiben derselben, und Vorrichtungen, die derartige Strahltriebwerke Steuern und/oder als Antrieb verwenden.

### HINTERGRUND DER ERFINDUNG

In herkömmlichen Strahltriebwerken wird ein Teil des Energieinhaltes eines Auslassgases nach dessen Austritt aus den Brennkammern des Strahltriebwerkes zum Antreiben eines Verdichters mittels einer Turbine abgezweigt, um das Einlassgas vor dessen Eintritt in die Brennkammern zu verdichten.

Diese Antriebsweise verringert die Schubenergie des Strahltriebwerks um zumindest die abgezweigte Energie und stellt ferner hohe Anforderungen an die Ausgestaltung der Turbine zum Erreichen einer homogenen Strömung und/oder auch an die verwendeten Materialien, insbesondere aufgrund der hohen Temperaturen des Auslassgases beim Eintritt in die Turbine. Es wäre daher wünschenswert diese Anforderungen zu senken, um bspw. Kosten für die Herstellung und/oder Wartung eines Strahltriebwerks zu reduzieren.

Zur Lösung dieser Aufgabe sind Turbinen mit Kühlvorrichtungen und/oder Flussmodulationssystemen bekannt, um eine Temperatur und/oder Strömung in den Strahltriebwerken zu steuern und zu kontrollieren.

Eine der Aufgaben der vorliegenden Erfindung besteht somit darin, die Komplexität von Strahltriebwerken zu senken, während zugleich die Kosten für deren Wartung und/oder Herstellung zu reduzieren sind.

### ZUSAMMENFASSUNG DER ERFINDUNG

Die Erfindung ist durch die unabhängigen Ansprüche definiert. Die abhängigen Ansprüche definieren vorteilhafte Ausführungsformen.

Gemäß einem Aspekt der Erfindung umfasst ein Antriebsmodul mit einem Strahltriebwerk einen Verdichter zum Verdichten eines Einlassgases vor dessen Eintritt in zumindest eine Brennkammer des Strahltriebwerks und einen elektrischen Antrieb zum Antreiben des Verdichters, wobei der elektrische Antrieb außerhalb eines Strahls des Strahltriebwerks angeordnet ist.

Eine Komplexität der Herstellung und Wartung des Antriebsmoduls wird dadurch verringert, während eine Steuerung und/oder ein erhöhter Schub ermöglicht wird.

Gemäß einer Weiterbildung umfasst Antriebsmodul einen Energiespeicher zum Speichern von elektrischer Energie zum Betreiben des elektrischen Antriebs, vorzugsweise eine Batterie mit einer Lebensdauer von mindestens 10, vorzugweise 15, noch bevorzugter 20 Jahren. Hierdurch wird eine erhöhte Lagerfähigkeit ermöglicht.

Gemäß einer Weiterbildung umfasst das Antriebsmodul einen Energiespeicher zum Bereitstellen der elektrischen Energie an den elektrischen Antrieb über eine Dauer von bis zu vier Stunden konfiguriert ist, wenn das Strahltriebwerk unter Volllast betrieben wird. Dadurch wird ein Einsatz des Antriebsmoduls mit erhöhtem Schub ermöglicht, insbesondere ein einmaliger Einsatz ohne Wiederverwendung des Antriebsmoduls.

Gemäß einer Weiterbildung umfasst das Antriebsmodul eine Steuerung, die zum Variieren eines Schubs des Strahltriebwerks mittels Steuern des Verdichters konfiguriert ist. Hierdurch wird ein Einsatzbereich des Antriebsmoduls vergrößert.

Gemäß einer Weiterbildung ist im Strahl des Strahltriebwerks keine Turbine angeordnet. Eine Komplexität der Herstellung und Wartung des Antriebsmoduls wird dadurch verringert.

Gemäß einer Weiterbildung umfasst das Antriebsmodul eine einzige Brennkammer. Eine Komplexität der Herstellung und Wartung des Antriebsmoduls wird dadurch verringert.

Gemäß einer Weiterbildung weist das Auslassgas beim Auslass aus der zumindest einen Brennkammer eine mittlere Temperatur von zumindest 1500°C auf. Hierdurch wird der Schub des Strahltriebwerks erhöht.

Gemäß einem Aspekt der Erfindung umfasst ein Verfahren zum Steuern eines Schubs des Antriebsmoduls ein Steuern des elektrischen Antriebs zum Antreiben eines Verdichters. In Verbindung mit dem oben dargelegten Antriebsmodul wird hierdurch eine effiziente und technisch einfache Steuerung des Antriebsmoduls ermöglicht.

Gemäß einem Aspekt der Erfindung umfasst ein Flugkörper das oben dargelegte Antriebsmodul. Eine Komplexität der Herstellung und Wartung des Flugkörpers wird dadurch verringert, während eine Steuerung und/oder ein erhöhter Schub ermöglicht wird.

Gemäß einem Aspekt der Erfindung umfasst ein Verfahren zum Lenken eines Flugkörpers mit dem oben dargelegten Antriebsmodul ein Steuern des elektrischen Antriebs zum Antreiben eines Verdichters. In Verbindung mit dem oben dargelegten Flugkörper wird hierdurch eine effiziente und technisch einfache Lenkung des Flugkörpers ermöglicht.

Weitere vorteilhafte Ausgestaltungen und Weiterbildungen ergeben sich aus den abhängigen Ansprüchen sowie aus der Beschreibung unter Bezugnahme auf die Figuren.

### KURZBESCHREIBUNG DER ZEICHNUNGEN

Im Folgenden wird die Erfindung unter Bezugnahme auf die folgenden Figuren näher erläutert.
Fig. 1 zeigt qualitative Enthalpie-Entropie-Diagramme für einen idealen Joule Kreisprozess für ein Strahltriebwerk mit (oben) und ohne (unten) interne Turbine im Strahl zum Antreiben eines Verdichters.
Fig. 2 zeigt einen schematischen Querschnitt einer beispielhaften Ausführungsform einer Vorrichtung mit einer beispielhaften Ausführungsform eines Strahltriebwerks ohne interne Turbine im Strahl zum Antreiben eines Verdichters.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

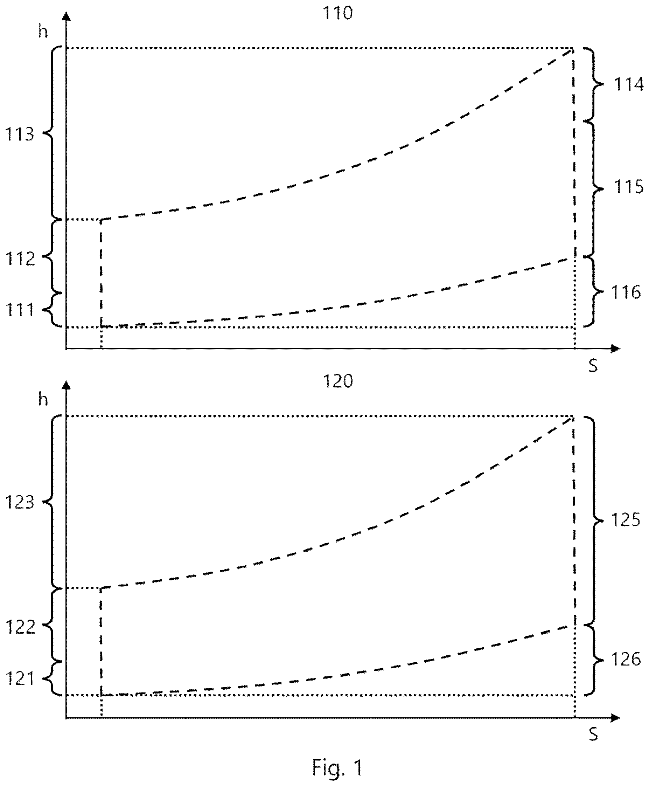

Fig. 1 zeigt qualitative Enthalpie-Entropie-Diagramme (H-S-Diagramme) für einen idealen Joule Kreisprozess für ein Strahltriebwerk mit (oben, 110) und ohne (unten, 120) interne Turbine im Strahl zum Antreiben eines Verdichters.

In einem idealen Joule Kreisprozess für ein Strahltriebwerk mit (oben, 110) interner Turbine im Strahl zum Antreiben des Verdichters wird in einem ersten Schritt 111 ein Einlassgas, regelmäßig Luft, ohne Arbeitszufuhr und, in einem zweiten Schritt 112, mit Arbeitszufuhr verdichtet.

In einem dritten Schritt 113 wird dem Einlassgas Wärme zugeführt, bspw. durch Verbrennung eines Brennstoffs in einer Brennkammer des Strahltriebwerks.

In einem vierten Schritt 114 wird dem Auslassgas, d.h. dem Gas nach dessen Austritt aus den Brennkammern, Energie mittels einer Expansion in der Turbine entnommen, um die Turbine anzutreiben und die für den zweiten Schritt 112 erforderliche Arbeit zu gewinnen.

In einem fünften Schritt 115 wird das Auslassgas weiter expandiert, um die Geschwindigkeit des Auslassgas zu erhöhen und somit einen Schub bereitzustellen.

Schließlich wird der Kreisprozess in einem sechsten Schritt 116 geschlossen, bei welchem das Auslassgas mit einem Wärmeverlust an die Umgebung abgegeben wird.

Im Vergleich zum idealen Joule Kreisprozess für ein Strahltriebwerk mit (oben, 110) interner Turbine wird dem idealen Joule Kreisprozess für ein Strahltriebwerk ohne (unten, 120) interne Turbine keine Energie in Form von Arbeit zum Antreiben der Turbine im Strahl des Strahltriebwerks entzogen. Wie in Fig. 1 gezeigt entfällt dabei der vierte Schritt 114 bzw. 124; die Entnahme von Energie zum Antreiben einer internen Turbine entfällt. Die Schritte 121, 122, 123, 125 und 126 im idealen Joule Kreisprozess für ein Strahltriebwerk ohne (unten, 120) interne Turbine entsprechen qualitativ den oben beschrieben Schritten 111, 112, 113, 115 und 116.

Erfindungsgemäß wird die Verdichtungsarbeit statt durch eine interne Turbine im Strahl durch einen externen Antrieb, bspw. einen elektrischen Antrieb, eines Verdichters geleistet. Der Antrieb ist nicht im Strahl des Strahltriebwerks sondern extern, außerhalb des Strahls angeordnet ist. Entsprechend steht im idealen Joule Kreisprozess für ein Strahltriebwerk ohne (unten, 120) interne Turbine mehr Energie zum Erzeugen des Schubs bereit.

Zudem können die Anforderungen an die Temperaturbeständigkeit der internen Turbine im Wesentlichen entfallen, so dass höhere Temperaturen im Strahltriebwerk und somit eine weitere Erhöhung des Schubes möglich sind, ohne die Lebensdauer des Strahltriebwerks so zu verringern, dass technisch keine Verwendungsszenarien mehr möglich sind. Beispielsweis sind Temperaturen von 1500°C und mehr im Strahl möglich. Ein derartiges Strahltriebwerk kann bspw. in Einwegraketen oder in anderen, Flugkörpern von kleinerer oder mittlerer Größe verwendet werden.

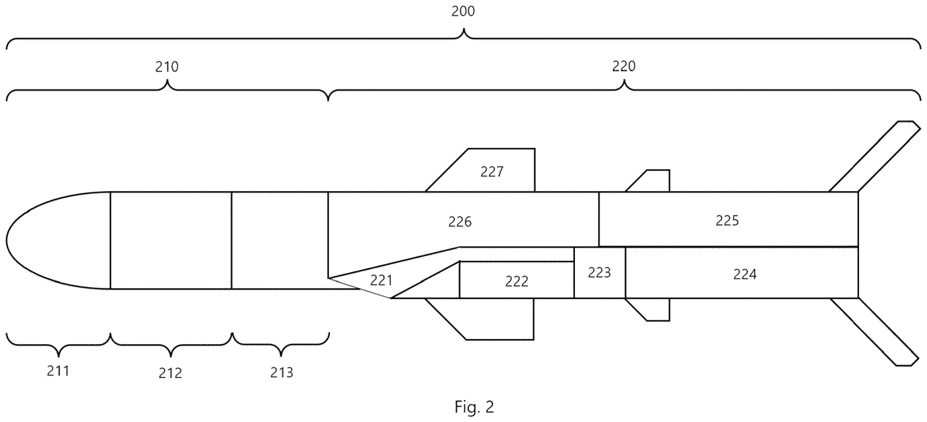

Die Verwendung einer beispielhaften Ausführungsform eines Strahltriebwerks ohne (unten, 120) interne Turbine in einer beispielhaften Ausführungsform eines Flugkörpers 200 wird nachfolgend mit Bezug zur Fig. 2 im Detail beschrieben.

Wie in Fig. 2 gezeigt umfasst der Flugkörper 200 ein Frontmodul 210 und ein Antriebsmodul 220 mit einem Strahltriebwerk ohne Turbine im Strahl. Das Antriebsmodul 220 kann einstufig, zweistufig oder mehrstufig sein. Eine oder mehrere der Antriebsstufen des Antriebsmoduls 220 können abwerfbar sein. Eine abwerfbare Antriebsstufe kann zum Erreichen einer minimalen Anfangsgeschwindigkeit beim Starten des Flugkörpers 200 konfiguriert sein.

Das Frontmodul 210 kann ein oder mehrere Submodule 212 bis 213 umfassen. Ein Submodul kann bspw. einen oder mehrere Sensoren wie ein aktives oder ein passives Radar, einen oder mehrere Effektoren, eine Steuerung und/oder Mittel zur drahtlosen Kommunikation umfassen.

Das beispielhafte Antriebsmodul 220 kann einen Einlass 221 umfassen. Der Einlass 221 kann zum Einlassen eines Einlassgases, regelmäßig Luft, konfiguriert sein. Insbesondere umfasst das beispielhafte Antriebsmodul 220 einen ein- oder mehrstufigen Verdichter 223, der nicht von einer an ihn mechanisch gekoppelten Turbine angetrieben wird, sondern über einen separaten eigenen Antrieb verfügt, um das Einlassgas zu verdichten. Der Verdichter 223 wird bspw. durch einen elektrischen Antrieb 222 angetrieben. Der elektrische Antrieb 222 kann zum Antreiben des Verdichter 223 mit elektrischer Energie versorgt werden. Die elektrische Energie kann in einem oder in mehreren Energiespeichern gespeichert werden. Bspw. kann die elektrische Energie durch eine Stromquelle bereitgestellt werden, bspw. durch eine Batterie 224. Der eine oder die mehreren Energiespeicher können außerhalb des Strahls des Strahltriebwerks im Flugkörper 200 angeordnet sein.

Der Energiespeicher kann zum Bereitstellen von elektrischer Energie an den elektrischen Antrieb 222 über eine Dauer von bis zu vier Stunden konfiguriert sein, wenn das Strahltriebwerk unter Volllast betrieben wird, vorzugsweise über die Dauer von bis zu zwei Stunden, noch bevorzugter über die Dauer von bis zu einer Stunde, in Abhängigkeit von der maximalen Temperatur im Strahltriebwerk. Der Energiespeicher kann ferner zum Speichern der elektrischen Energie über eine Dauer von zehn, vorzugsweise 15, noch bevorzugter 20 Jahren konfiguriert sein.

Das Strahltriebwerk kann mittels einer Steuerung regelbar sein, um den Schub des Strahltriebwerks während eines Startens oder während eines Fluges oder einer Flugphase zu variieren. Somit kann bspw. auf einen mehrstufigen Aufbau verzichtet werden. Bspw. kann eine abwerfbare Antriebsstufe zum Starten des Flugkörpers 200 nicht erforderlich sein. Die Steuerung im Frontmodul 210 kann so zum Steuern des Schubs des Strahltriebwerks konfiguriert sein. Ein Booster kann in den Strahl integriert sein. Auf eine externe Anordnung eines Boosters kann verzichtet werden.

Das beispielhafte Antriebsmodul 220 kann ferner eine einzige Brennkammer 225 umfassen, um eine Komplexität bei der Herstellung und Kosten für die Entwicklung und Herstellung des Antriebsmoduls zu verringern. Das Antriebsmodul 220 kann auch mehrere Brennkammern umfassen.

Das beispielhafte Antriebsmodul 220 kann einen Treibstoffbehälter 226 umfassen. Der Treibstoffbehälter 226 kann zum Aufnehmen eines festen oder eines flüssigen Treibstoffs konfiguriert sein oder einen oder mehrere Treibstoffe enthalten. Im Falle eines Feststofftriebwerksystems, also bspw. einer turbinenlosen Air-Turbo-Rocket, kann der Treibstoffbehälter 226 zu einem Gas-Generator werden. Air-Turbo-Rockets und/oder andere Feststofftriebwerksysteme können zur Nachverbrennung ein unteroxidiertes Abgas des Gas-Generators in die Brennkammer 225 leiten.

Das beispielhafte Antriebsmodul 220 kann ferner eine Vielzahl von Trag- und/oder Leitwerken 227 umfassen. Die Vielzahl von Trag- und/oder Leitwerken 227 kann zum Erhöhen einer Reichweite des Flugkörpers 200 und/oder zum Steuern des Flugkörpers 200 konfiguriert sein, bspw. mittels der Steuerung im Frontmodul 210.

Der Treibstoffbehälter 226 kann zum Aufnehmen eines festen und/oder eines flüssigen Treibstoffs konfiguriert sein oder einen oder mehrere feste und/oder flüssige Treibstoffe enthalten.

Im Vergleich zu einem herkömmlichen Strahltriebwerk umfasst das erfindungsgemäße Strahltriebwerk keinen Antrieb der innerhalb des Strahls im Strahltriebwerk angeordnet ist. Statt einer Turbine wird der Verdichter durch einen Antrieb angetrieben, der der Strömung keine Arbeit/Energie entzieht, allerdings die dazu erforderlichen Energie anderweitig entnimmt. Im Vergleich zu einem herkömmlichen Strahltriebwerk kann somit auf eine Turbine innerhalb des Strahls des Strahltriebwerks zum Antreiben des Verdichters verzichtet werden. Es kann bspw. auf einen Stator der Turbine, einen Turbinenkonus, eine Welle, welche die Turbine und den Verdichter verbindet, eine Vielzahl von Brennkammern und ggf. auf Treibstoffzuleitungen zu Düsen in den Brennkammern, sowie ggf. auf einen Startermotor verzichtet werden.

Im Vergleich zu einem herkömmlichen Strahltriebwerk wird die Arbeit zur Verdichtung eines Luftmassenstroms vor deren Eintritt in die Brennkammer komplett aus vom Treibstoff getrennter, vorzugweise elektrischer Energie bezogen. Auf eine Turbinenstufe im Strahl des Strahltriebwerks wird komplett verzichtet. In der Summe ergibt sich so eine Reduktion der Komplexität des Antriebsstranges und damit der Herstellungs- und Wartungskosten bei gleichzeitig höherem spezifischem Schub. Zudem wird auf eine einfache und kostengünstige Weise ein regelbarer Antrieb bereitgestellt, welcher eine verbesserte Lenkung bspw. eines Flugkörpers 200 ermöglicht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHENLISTE

- 111-116: Schritte im idealen Joule Kreisprozess für ein Strahltriebwerk mit interner Turbine
- 121-126: Schritte im Joule Kreisprozess für ein Strahltriebwerk ohne interne Turbine
- 200: Flugkörper
- 210: Frontmodul
- 211 bis 213: Submodule des Frontmoduls 110
- 220: Antriebsmodul
- 221: Einlass
- 222: Antrieb des Verdichters 223
- 223: Verdichter
- 224: Batterie
- 225: Brennkammer
- 226: Treibstoffbehälter
- 227: Vielzahl von Trag- und/oder Leitwerken

## Patentansprüche

1. Antriebsmodul (220) mit einem Strahltriebwerk, wobei das Antriebsmodul (220) umfasst:
einen Verdichter (223) zum Verdichten eines Einlassgases vor dessen Eintritt in zumindest eine Brennkammer (225) des Strahltriebwerks; und
einen elektrischen Antrieb (222) zum Antreiben des Verdichters (123), wobei der elektrische Antrieb (222) außerhalb eines Strahls des Strahltriebwerks angeordnet ist.

2. Antriebsmodul (220) nach Anspruch 1, wobei das Antriebsmodul (220) ferner umfasst:
einen Energiespeicher (224) zum Speichern von elektrischer Energie zum Betreiben des elektrischen Antriebs (222), vorzugsweise eine Batterie mit einer Lebensdauer von mindestens 10, vorzugweise 15, noch bevorzugter 20 Jahren.

3. Antriebsmodul (220) nach Anspruch 2, wobei der Energiespeicher (224) zum Bereitstellen der elektrischen Energie an den elektrischen Antrieb (222) über eine Dauer von bis zu vier Stunden konfiguriert ist, wenn das Strahltriebwerk unter Volllast betrieben wird.

4. Antriebsmodul (220) nach irgendeinem der Ansprüche 1 bis 3, wobei das Antriebsmodul (220) eine Steuerung umfasst, die zum Variieren eines Schubs des Strahltriebwerks mittels Steuern des Verdichters (123) konfiguriert ist.

5. Antriebsmodul (220) nach irgendeinem der Ansprüche 1 bis 4, wobei im Strahl des Strahltriebwerks keine Turbine angeordnet ist

6. Antriebsmodul (220) nach irgendeinem der Ansprüche 1 bis 5, wobei das Strahltriebwerk eine einzige Brennkammer umfasst.

7. Antriebsmodul (220) nach irgendeinem der Ansprüche 1 bis 6, wobei ein Auslassgas beim Auslass aus der zumindest einen Brennkammer (225) eine mittlere Temperatur von zumindest 1500°C aufweist

8. Verfahren zum Steuern eines Schubs des Antriebsmoduls (220) nach irgendeinem der Ansprüche 1 bis 7, wobei das Verfahren umfasst: Steuern des elektrischen Antriebs (222) zum Antreiben eines Verdichters (223).

9. Flugkörper (200) umfassend das Antriebsmodul (220) nach irgendeinem der Ansprüche 1 bis 7.

10. Verfahren zum Lenken des Flugkörpers (200) nach Anspruch 9, umfassend das Antriebsmodul (220) nach irgendeinem der Ansprüche 1 bis 7, wobei das Verfahren umfasst:
Steuern des elektrischen Antriebs (222) zum Antreiben eines Verdichters (223).
